# EUROPÄISCHE PATENTSCHRIFT

(11) **EP 3 232 102 B1**
(45) Veröffentlichungstag und Bekanntmachung des Hinweises auf die Patenterteilung: **09.10.2019**
(21) Anmeldenummer: 17162367.1
(22) Anmeldetag: 22.03.2017
(51) Int. Cl.: F16K 31/53, F16K 11/087, F16K 11/16, F01P 7/16, F16K 31/50

(54) **DREHSCHIEBERVENTIL**
ROTARY NOZZLE VALVE
VANNE ROTATIVE

(30) Priorität: 16.04.2016 DE 102016004706
(43) Veröffentlichungstag der Anmeldung: 18.10.2017
(73) Patentinhaber: Audi AG, 85045 Ingolstadt (DE)
(72) Erfinder: Weustenfeld, Thomas, 85049 Ingolstadt (DE); Menken, Jan Christoph, 85055 Ingolstadt (DE); Störmer, Markus, 92334 Berching (DE); Schmidt, Patrick, 37520 Osterode am Harz (DE); Walter, Dieter, 85098 Großmehring (DE); Tratner, Sebastian, 93336 Sandersdorf (DE)

(56) Entgegenhaltungen:
- DE-A1- 2 602 864
- DE-A1-102011 119 237
- DE-A1-102011 120 259
- DE-A1-102015 109 728
- DE-A1-102015 210 157
- DE-B3-102012 012 295
- JP-A- 2009 068 553
- US-A- 4 501 295
- US-A- 5 167 254
- US-A1- 2015 027 572

## Beschreibung

Die Erfindung betrifft ein Drehschieberventil mit mehreren Ventilschiebern.

Ein gattungsbildendes Drehschieberventil ist aus der US 4 501 295 A bekannt. Dieses bekannte Drehschieberventil umfasst ein zylinderförmiges Drehschiebergehäuse mit einem zylinderförmigen Ventilraum, welcher mittels einer mit dem Drehschiebergehäuse verbundenen Trennwand in zwei Ventilschieberkammern geteilt ist. Jede Ventilschieberkammer weist neben einem Ventilschieber eine Fluideingangsöffnung sowie zwei diametral gegenüberliegende Fluidausgangsöffnungen des Drehschiebergehäuses auf, wobei die Fluideingangsöffnung gegenüber den Fluidausgangsöffnungen jeweils um 90° versetzt in dem Drehschiebergehäuse angeordnet ist. Die Fluideingangsöffnungen sowie die Fluidausgangsöffnungen sind jeweils als Öffnung in der Gehäusewand des Drehschiebergehäuses realisiert. Über die Fluideingangsöffnung einer Ventilschieberkammer strömt Fluid in diese Ventilschieberkammer, während über die Fluidausgangsöffnungen das Fluid aus der Ventilschieberkammer abfließen kann.

Die in jeder Ventilschieberkammern des aus der US 4 501 295 A bekannten Drehschieberventils angeordneten Ventilschieber sind über eine axial durch das Drehschiebergehäuse geführten Welle drehverbunden, wobei diese Welle in dem Drehschiebergehäuse nicht nur drehbar, sondern auch axial verschiebbar gelagert ist. Innerhalb der Ventilschieberkammern ist die Welle jeweils durch eine verdrehbare Hülse geführt, die eine radial verlaufende Buchse aufweist, in welcher ein verschiebbarer Kolben angeordnet ist, welcher mit einem Ende gelenkartig mit der Welle und mit dem gegenüberliegenden Ende mit einem Ventilschuh verbunden ist. Durch eine axiale Verschiebung der Welle wird der Kolben in der Buchse verschoben, so dass entweder ein Ventilschuh des Ventilschiebers eine Fluideingangsöffnung oder eine Fluidausgangsöffnung verschließt oder von derselben abgehoben wird. Durch eine Drehung der Welle kann der Ventilschuh des Ventilschiebers vor eine Fluideingangsöffnung oder eine Fluidausgangsöffnung platziert werden.

In heutigen Fahrzeugen wird das Thermomanagement mit Hilfe eines Kühlmittelkreislaufes realisiert, welcher einen Hauptkreislauf und in der Regel mehrere Teilkreisläufe aufweist. Es ist bekannt, für die Verschaltung dieser Kreisläufe Drehschieberventile einzusetzen.

Durch eine Kombination von geschalteten und ungeschalteten Eingängen eines Drehschieberventils wird der Kühlmittelstrom gesteuert. Solche Drehschieberventile bestehen in der Regel aus einem Drehschiebergehäuse, das von Kühlmittel durchströmbare Anschlüsse umfasst und in dem um eine Drehachse drehbare, mit Abgängen zusammenwirkende mehrere Ventilschieber eingesetzt und über einen Stellantrieb verstellbar sind, wobei die Ventilschieber in Abhängigkeit einer Drehposition unterschiedliche Durchströmungsquerschnitte für einen Kühlmittelstrom freigeben.

Solche Drehschieberventile sind bspw. aus der DE 10 2012 012 295 B3 oder der DE 10 2011 119 237 A1 bekannt.

Ein solches bekanntes Drehschieberventil besteht aus einem Drehschiebergehäuse mit mehreren axial hintereinander auf einer Drehachse angeordneten Ventilschieber und einem Drehgetriebe, mit welchem diese Ventilschieber unabhängig voneinander geregelt werden können. Dieses Drehgetriebe weist eine antriebbare Schnecke auf, die über ein Koppelelement mit einem Läufer koppelbar ist. Die Schnecke weist ein Gewindegang auf, so dass der Läufer im gekoppelten Zustand durch eine vorgegebene Drehung der Schnecke axial an die Position einer Nabe eines Ventilschiebers verschoben und dort mit einer Innenverzahnung des Ventilschiebers gekoppelt wird. Anschließend wird der Läufer in Umfangsrichtung gedreht, wobei gleichzeitig auch der Ventilschieber gedreht und so positioniert wird, dass ein bestimmter Strömungsquerschnitt eingestellt wird.

Diese bekannten Drehschieberventile gemäß der DE 10 2012 012 295 B3 oder der DE 10 2011 119 237 A1 umfassen einen zentralen Eingang für die Zuführung von flüssigem oder gasförmigen Medium, wie bspw. von Kühlmittel, so dass der ganze Ventilraum, in welchem die Ventilschieber angeordnet sind, mit dem Medium geflutet wird. Durch die Verstellung der einzelnen Ventilschieber werden dann Ausgänge geöffnet, so dass das Medium in radialer Richtung über entsprechende Abgänge aus dem Drehschiebergehäuse ausströmen kann. Damit wird jedoch die Flexibilität hinsichtlich der Verbindungsmöglichkeiten einzelner Ein- und Ausgänge eingeschränkt.

Des Weiteren beschreibt die DE 26 02 864 A1 ein Drehschieberventil für Brennkraftmaschinen. Ein solches Ventilsystem weist ein Einlassventil zur Einführung eines Brennstoffluftgemisches in die Verbrennungskammer eines Motorzylinders sowie ein Auslassventil zum Abführen der Verbrennungsrückstände aus der Verbrennungskammer auf.

Dieses aus der DE 26 02 864 A1 bekannte Drehschieberventil umfasst ein teilweise einen Zylinderkopf bildendes Drehschiebergehäuse mit einem zylinderförmigen Ventilraum, welcher mittels eines Trennelementes, welches zusammen mit zwei Ventilschiebern auf einer Welle angeordnet ist, in zwei Ventilschieberkammern geteilt ist. In jeder dieser Ventilschieberkammern befindet sich ein Ventilschieber, wobei in dem den Zylinderkopf bildenden Gehäuseteil des Drehschiebergehäuses eine Ventilschieberkammer eine Auslassöffnung und einen Auslasskanal und die andere Ventilschieberkammer eine Einlassöffnung und einen Einlasskanal aufweist. Die Auslassöffnung sowie die Einlassöffnung erstrecken sich jeweils ausgehend von der jeweiligen Ventilschieberkammer senkrecht nach unten in die Verbrennungskammer und bilden jeweils eine Öffnung in der Gehäusewand, während der Auslasskanal und der Einlasskanals sich jeweils waagrecht in entgegengesetzte Richtungen durch den Zylinderkopf nach außen erstrecken.

Ferner beschreiben die DE 10 2015 210 157 A 1 sowie die US 2015/027572 A1 ein Drehschieberventil mit einem einen Ventilraum aufweisenden Drehschiebergehäuse. Dieser Ventilraum wird durch eine mit dem Drehschiebergehäuse verbundene Trennwand in zwei Ventilschieberkammern geteilt. Jede Ventilschieberkammer weist neben einem Ventilkörper eine Eingangsöffnung und eine Ausgangsöffnung auf, die als Öffnung in der Gehäusewand des Drehschiebergehäuses realisiert sind. Die beiden Ventilkörper weisen einen Fluidkanal auf, mit welcher in Abhängigkeit von deren Drehstellung eine Fluidströmung über die Eingangsöffnung und die Ausgangsöffnungen zulässt oder unterbricht. Mittels eines Aktuators können die Stellungen der beiden Ventilkörper gesteuert werden, wobei hierzu eine Aktuatorwelle durch die beiden Ventilkörper geführt ist. Ein Ventilkörper ist drehfest mit der Aktuatorwelle verbunden, während der andere Ventilkörper über eine Planetengetriebeanordnung mit der Aktuatorwelle verbunden ist.

Ein Drehschieberventil gemäß der DE 10 2012 012 295 B3 ist mit mehreren Verstellgliedern und einem einen Drehwinkelunterschied zwischen den Verstellgliedern erzeugenden Drehgetriebe ausgebildet, wobei das Drehgetriebe eine antreibbare Schnecke aufweist, die über ein Koppelelement mit einem Läufer koppelbar ist. Die Schnecke weist einen Gewindegang auf, der so geformt ist, dass der Läufer im gekoppelten Zustand durch eine Drehung der Schnecke axialverschiebbar ist, wobei die Schnecke wenigstens ein Labyrinth aufweist, das so geformt ist, dass der Läufer im gekoppelten Zustand durch eine Drehung der Schnecke in Umfangsrichtung verdrehbar ist.

Ein Drehschieberventil nach der US 5 167 254 A weist mehrere Querschnittsverstellglieder auf, mit welchen unterschiedliche Durchströmungsquerschnitte für unterschiedliche Durchströmungen einstellbar sind. Die Querschnittsverstellglieder sind fest miteinander verbunden, so dass sie jeweils dieselbe Drehbewegung ausführen und dabei eine oder mehrere Durchströmungsquerschnitte einstellen.

Schließlich ist auch aus der JP 2009 068 553 A ein Drehschieberventil mit einem Querschnittsverstellglied bekannt, mit welchem in Abhängigkeit der Drehstellung Durchströmungsöffnungen für unterschiedliche Durchströmungen einstellbar sind. Dieses Drehschieberventil ist mit einer als radial verlaufender Kanal realisierten Eingangsöffnung sowie einer als weiteren radial verlaufenden Kanal realisierten ersten Ausgangsöffnung und einer zweiten Ausgangsöffnung ausgebildet, wobei die zweite Ausgangsöffnung ebenso als radial verlaufender Kanal realisiert ist. Die radial verlaufenden Kanäle sind jeweils über einen ein Rückschlagventil aufweisenden und axial verlaufenden Kanal verbunden.

Es ist Aufgabe der Erfindung ein gegenüber dem Stand der Technik verbessertes Drehschieberventil mit mehreren Ventilschiebern anzugeben.

Diese Aufgabe wird gelöst durch ein Drehschieberventil mit den Merkmalen des Patentanspruchs 1.

Gemäß der Erfindung umfasst dieses Drehschieberventil ein Drehschiebergehäuse mit:
- einem Ventilraum,
- einem in dem Ventilraum angeordneten Ventilkörper mit mehreren auf einer Welle abwechselnd mit Trennelementen angeordneten Ventilschiebern, wobei von den einem Ventilschieber benachbarten Trennelementen zusammen mit der zwischen den Trennelementen liegenden Innenwandung des Ventilraums eine gegenüber dem Ventilraum fluiddichte Ventilschieberkammer ausgebildet ist,
- mehreren Fluideingangsöffnungen zum Zuführen eines Fluids,
- mehreren Fluidausgangsöffnungen zum Abführen des Fluids,
- wenigstens einer in jeweils einer Ventilschiebekammer endenden Zulauföffnung, und- wenigstens einer in jeweils einer Ventilschiebekammer beginnenden Ablauföffnung.

Erfindungsgemäß ist vorgesehen, dass
- das Drehschiebergehäuse 2-teilig aus halbzylinderförmigen Gehäusehälften hergestellt ist,
- das Drehschiebergehäuse ein Kanalsystem mit die Fluideingangsöffnungen mit den Zulauföffnungen verbindenden Fluidkanälen und die Fluidausgangsöffnungen mit den Ablauföffnungen verbindenden Fluidkanälen aufweist, und
- das Kanalsystem zum einen aus Fluidkanälen, die als Fluidkanäle axial in den beiden Gehäusehälften verlaufen, und andererseits aus Fluidkanälen, die ausgehend von den axial verlaufenden Fluidkanälen als Fluidkanäle radialverlaufend in einer Ventilschieberkammer enden.

Mit einem solchen erfindungsgemäßen Drehschieberventil ist es möglich, Fluid einzelnen ausgewählten Ventilschiebern zuzuführen, da jeder Ventilschieber in einer eigenen Ventilschieberkammer angeordnet ist. Damit können einzelne Ein- und Ausgänge beliebig über eine solche Ventilschieberkammer fluidverbunden werden.

Mittels eines solchen Kanalsystems in dem Drehschiebergehäuse können einzelne Ein- und Ausgänge beliebig verbunden werden und damit kann ein komplexer "Verschaltungsplan" mit einem solchen Gehäuse realisiert werden. Dies führt zu einem hohen Integrationsgrad mit Schieberventilen, dieauch als Mischventile realisiert werden können. Zudem erlaubt dieses erfindungsgemäße Drehschieberventil die einfache Integration neuer Betriebszustände oder Funktionen sowie die Anbindung weiterer Komponenten auf Basis einer modularen Komponente. Ein weiterer Vorteil besteht darin, dass Kosten, Fertigungszeiten, Komplexität und die Anzahl der Einzelteile sich reduzieren lassen.

Nach einer bevorzugten Ausführung der Erfindung ist es vorgesehen, dass
- die Fluidkanäle in dem Drehschiebergehäuse axial verlaufende Fluidkanäle umfassen, und
- die Fluidkanäle in dem Drehschiebergehäuse radial verlaufende Fluidkanäle umfassen.

Nach einer weiteren bevorzugten Ausgestaltung des erfindungsgemäßen Drehschieberventils ist eine mit der Welle gekoppelte Antriebseinheit vorgesehen, mit welcher ein Ventilschieber selektiv anwählbar und in eine vorgegebene Drehwinkelstellung steuerbar ist. In wenigstens einer solchen Drehwinkelstellung wird durch den Ventilschieber wenigstens eine Zulauföffnung der Ventilschieberkammer mit wenigstens einer Ablauföffnung der Ventilschieberkammer fluidverbunden.

Nach einer weiteren vorteilhaften Ausgestaltung der Erfindung ist vorgesehen, dass
- die Ventilschieber jeweils eine Hohlnabe und einen mit dieser radial verbundenen Ringkörper aufweisen, wobei zwischen der Hohlnabe und dem Ringkörper ein zur Ventilschieberkammer offener Ringraum gebildet ist, und
- die zwei benachbarte Ventilschieberkammern trennenden Trennelemente gleichzeitig auf den Hohlnaben benachbarter Ventilschieber fluiddicht angeordnet sind. Vorzugsweise ist der Ringkörper der Ventilschieber mit wenigstens einer Auslassöffnung ausgebildet.

Mit einem solchen Ventilschieber mit zugehörigen Trennelementen wird eine sehr kleine und kompakte Ventilschieberkammer realisiert.

Eine weitere vorteilhafte Weiterbildung der Erfindung sieht vor, dass die wenigstens eine Ablauföffnung einer Ventilschieberkammer mit einem Dichtungspaket ausgebildet ist, welcher gegenüber der Ventilschieberkammer fluiddicht an dem Ventilschieber anliegt. Bei einer Einlassöffnung der Ventilschieberkammer ist jedoch kein Dichtungspaket vorgesehen, so dass dadurch die Ventilschieberkammer und damit auch der Ringraum des Ventilschiebers mit Fluid geflutet wird. Über die gegenüber der Ventilschieberkammer fluiddichten Dichtungspakete einer Ablauföffnung wird das Fluid weitergeleitet.

Eine weitere vorteilhafte Ausgestaltung der Erfindung bevorzugt die 2-teilige Herstellung des Drehschiebergehäuses aus halbzylinderförmigen Gehäusehälften. Solche halbzylinderförmigen Gehäusehälften mit jeweils einem Teil des Kanalsystems können kostengünstig mittels eines Spritzgussverfahrens hergestellt werden. Vorzugsweise ist auch möglich, die halbzylinderförmigen Gehäuseteile des Drehschiebergehäuse jeweils zweischalig aus einer inneren Halbschale und einer äußeren Halbschale zu bilden, wobei zur Bildung des Kanalsystems eine innere und eine äußere Halbschale jeweils korrespondierende Kanalhälften aufweisen.

Weiterhin zeichnet sich eine vorteilhafte Ausgestaltung des erfindungsgemäßen Drehschieberventils dadurch aus, dass die Welle als Doppelwelle mit einer Innenwelle und einer koaxial zur Innenwelle angeordnete Außenwelle ausgebildet ist, wobei
- die Innenwelle ausgebildet ist, in Abhängigkeit einer Drehwinkelstellung eine Wirkverbindung zwischen der Außenwelle und einem der Ventilschieber herzustellen, und
- die Außenwelle ausgebildet ist, den bestimmten Ventilschieber in eine definierte Drehwinkelstellung zu verdrehen.

Damit kann die Antriebseinheit mit einer solchen als Doppelwelle ausgebildeten Welle kompakt und mit wenigen Bauteilen realisiert werden

Weiterbildungsgemäß ist die Innenwelle derart mit der Außenwelle wirkverbunden, dass in Abhängigkeit der Drehwinkelstellung der Innenwelle die Außenwelle in der Anzahl der Ventilschieber entsprechenden Schiebestellungen verschiebbar ist. Dabei ist vorzugsweise die Wirkverbindung der Innenwelle mit der Außenwelle mittels eines Schneckengetriebes realisiert.

In einer weiteren bevorzugten Ausführungsform der Erfindung ist vorgesehen, dass
- die Ventilschieber jeweils mit einer Innenverzahnung ausgebildet sind,
- auf der Außenwelle je ein zur Innenverzahnung eines Ventilschiebers korrespondierender Verzahnungskörper angeordnet ist, und
- in jeder Schiebestellung der Außenwelle eine Drehverbindung zwischen einem Verzahnungskörper und der korrespondierenden Innenverzahnung eines Ventilschiebers hergestellt ist.

Damit steht in jeder Schiebestellung der Außenwelle genau ein Verzahnungskörper mit der Innenverzahnung eines Ventilschiebers in Eingriff.

In vorteilhafterweise umfasst die Antriebseinheit einen die Innenwelle antreibenden ersten Antrieb und einen die Außenwelle antreibenden zweiten Antrieb.

Die Erfindung wird nachfolgend anhand eines Ausführungsbeispiels unter Bezugnahme auf die beigefügten Figuren ausführlich beschrieben. Es zeigen:
- Figur 1: eine Explosionsdarstellung eines erfindungsgemäßen Drehschieberventils,
- Figur 2: eine axiale Längsschnittdarstellung des erfindungsgemäßen Drehschieberventils nach Figur 1,
- Figur 3: eine Radialschnittdarstellung des erfindungsgemäßen Drehschieberventils nach Figur 1,
- Figur 4: eine Explosionsdarstellung einer zweischaligen ersten Gehäusehälfte des Drehschiebergehäuses des Drehschieberventils nach Figur 1,
- Figur 5: eine Explosionsdarstellung einer zweischaligen zweiten Gehäusehälfte des Drehschiebergehäuses des Drehschieberventils nach Figur 1,
- Figur 6: eine perspektivische Schnittdarstellung des Ventilkörpers des erfindungsgemäßen Drehschiebers nach Figur 1 mit einem ersten angetriebenen Ventilschieber, und
- Figur 7: eine Schnittdarstellung des Ventilkörpers nach Figur 6 mit einem fünften angetriebenen Ventilschieber.

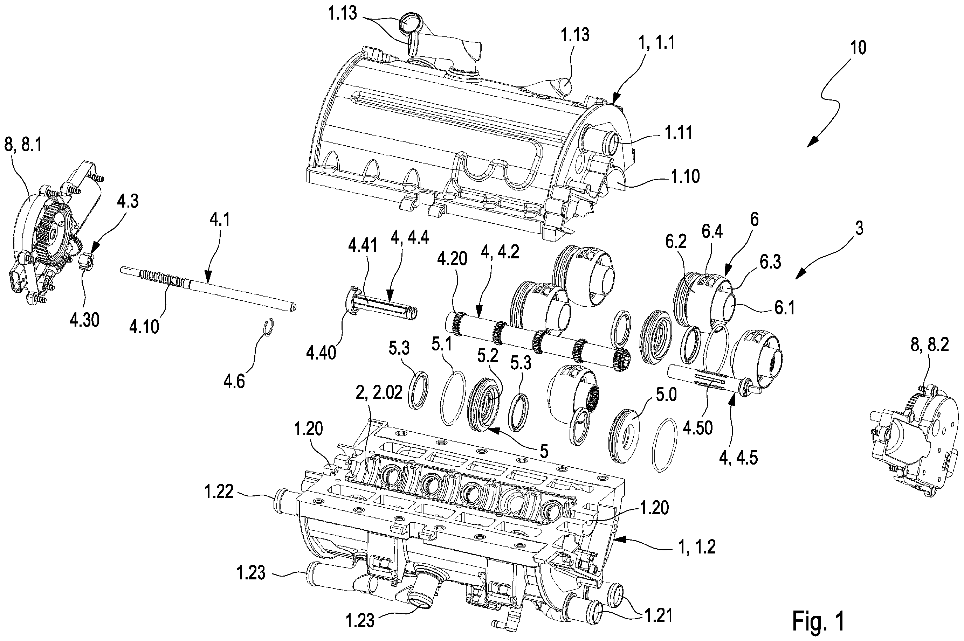

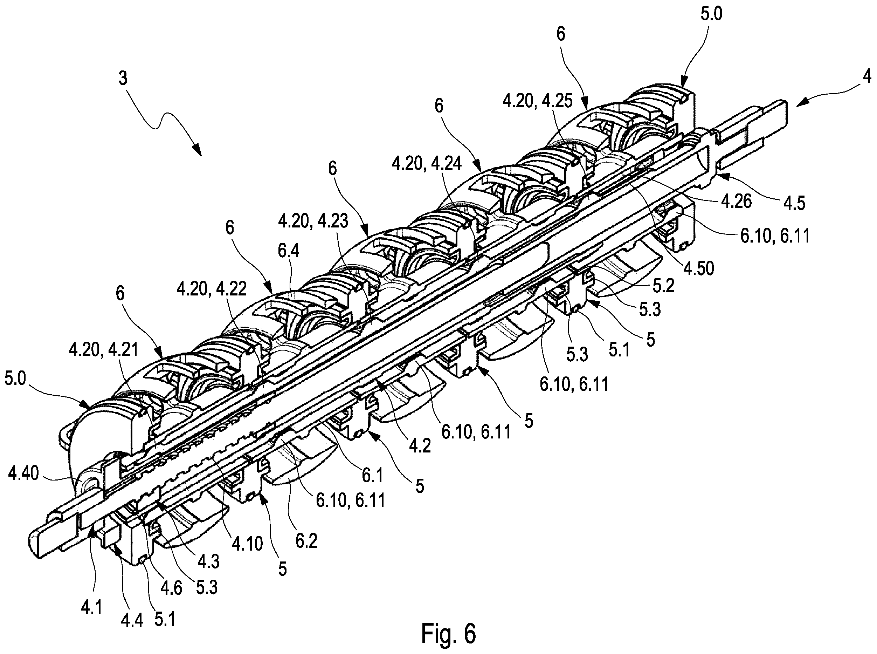

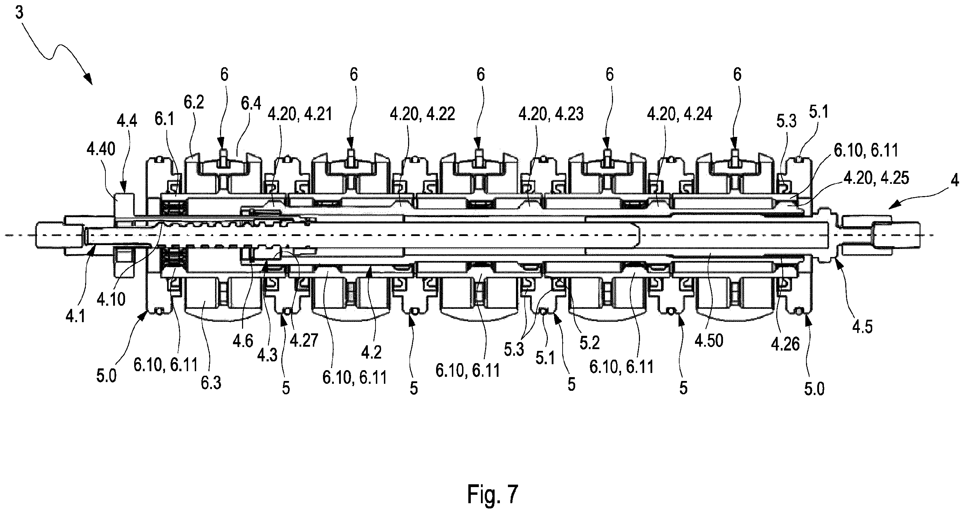

Das Drehschieberventil 10 gemäß Figur 1 umfasst als wesentlichsten Teile ein 2-teiliges Drehschiebergehäuse 1 aus einer halbzylinderförmigen ersten Gehäusehälfte 1.1 und einer halbzylinderförmigen zweiten Gehäusehälfte 1.2, einen in den Figuren 6 und 7 dargestellten Ventilkörper 3 mit auf einer Welle 4 abwechselnd angeordneten scheibenförmigen Trennelementen 5 und Ventilschiebern 6 sowie eine aus einem ersten Antrieb 8.1 und einem zweiten Antrieb 8.2 aufgebauten Antriebseinheit 8 zum Antreiben der Welle 4.

Sind die beiden Gehäusehälften 1.1 und 1.2 zu einem zylinderförmigen Drehschiebergehäuse 1 verbunden, entsteht ein in axialer Richtung verlaufender kreiszylinderförmiger Ventilraum 2, der von jeweils einem Hohl-Halbzylinder 2.01 der ersten Gehäusehälfte 1.1 und einem Hohl-Halbzylinder 2.02 der zweiten Gehäusehälfte 1.2 gebildet wird.

In diesem Ventilraum 2 befindet sich der Ventilkörper 3 und ist mittels der Welle 4 in an den Stirnseiten der beiden Gehäusehälften 1.1 und 1.2 angeformten Lagerhalbschalen 1.10 und 1.20, die zusammen ein vollständiges Lager bilden, drehbar gelagert.

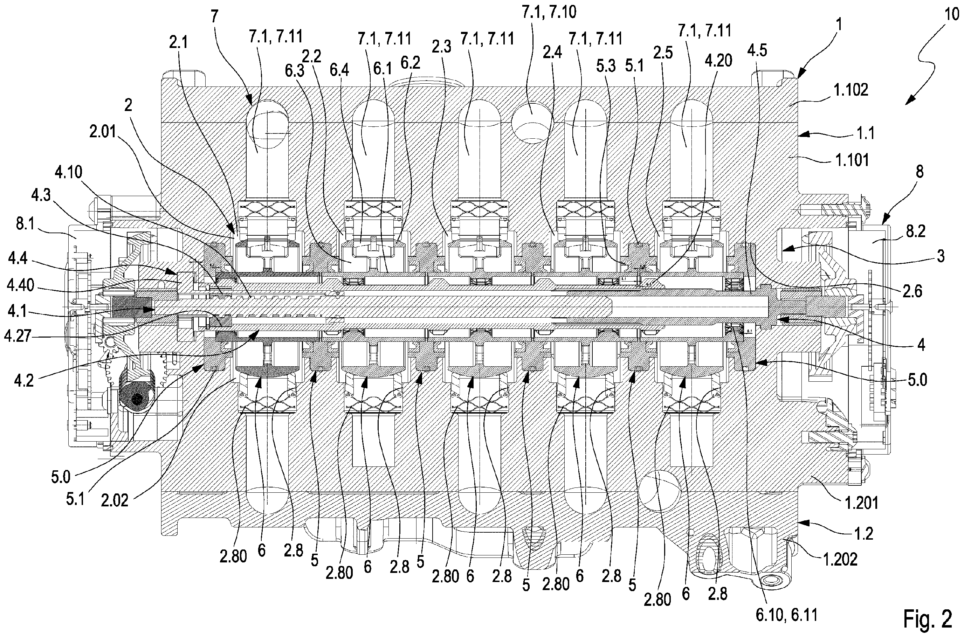

Der Ventilraum 2 wird in axialer Richtung in fünf Ventilschieberkammern 2.1 bis 2.5 mittels der Trennelemente 5 aufgeteilt. Hierzu greifen in äquidistanten Abständen auf der Innenwandung des Ventilraums 2 angeordnete und radial umlaufende Nuten 2.6 die scheibenförmigen Trennelemente 5 randseitig ein, wobei diese Trennelemente 5 stirnseitig einen umlaufenden Dichtring 5.1 aufweisen, so dass der zwischen zwei benachbarten Trennelementen 5 und der dazwischen liegenden Innenwandung des Ventilraums 2 jeweils eine Ventilschieberkammer 2.1 bis 2.5 gebildet wird. In jeder dieser Ventilschieberkammern 2.1 bis 2.5 befindet sich jeweils ein Ventilschieber 6, der gemäß den Figuren 2, 6 und 7 zwischen zwei benachbarten Trennelementen 5 angeordnet ist. Damit sind alle Ventilschieberkammern 2.1 bis 2.5 sowohl gegenseitig als auch in Richtung der Lagerhalbschalen 1.10 und 1.20 fluiddicht.

In jeder Ventilschieberkammer 2.1 bis 2.5 endet mindestens eine Zulauföffnung 2.7 zum Zuführen von Fluid in die jeweilige Ventilschieberkammer. Anschließend wird dieses Fluid aus jeder dieser Ventilschieberkammern 2.1 bis 2.5 mittels des in der jeweiligen Ventilschieberkammer angeordneten Ventilschiebers 6 in wenigstens eine Ablauföffnung 2.8 querschnittsgesteuert abgeführt, die in der gleichen Ventilschieberkammer beginnt.

Das Drehschiebergehäuse 1 weist ein Kanalsystem 7 mit Fluidkanälen 7.1 auf, die zum einen entsprechend einem vorgegebenen Verschaltungsplan mehrere Fluideingangsöffnungen 1.11, 1.12, 1.21 und 1.22 mit den in den Ventilschieberkammern 2.1 bis 2.5 endenden Zulauföffnungen 2.7 verbinden und zum anderen die in den Ventilschieberkammern 2.1 bis 2.5 beginnenden Ablauföffnungen 2.8 mit mehreren Fluidausgangsöffnungen 1.13 und 1.23 entsprechend diesem vorgegebenen Verschaltungsplan verbinden. Das bedeutet, dass jede Fluideingangsöffnung 1.11, 1.12, 1.21 und 1.22 über Fluidkanäle 7.1 mit definierten Ventilschieberkammern über die jeweilige Zulauföffnung 2.7 verbunden ist und ebenso, dass jede Ablauföffnung 2.8 über Fluidkanäle 7.1 mit definierten Fluidausgangsöffnungen 1.13 und 1.23 verbunden ist.

Gemäß Figur 1 sind die Fluideingangsöffnungen 1.11, 1.12, 1.21 und 1.22 jeweils am stirnseitigen Ende des Drehschiebergehäuses 1 realisiert. So befindet sich an der ersten Gehäusehälfte 1.1 eine Fluideingangsöffnung 1.11, während die zweite Gehäusehälfte 1.2 an einer Stirnseite zwei Fluideingangsöffnungen 1.21 und gegenüberliegenden eine Fluideingangsöffnung 1.22 aufweist.

Die Fluidausgangsöffnungen 1.13 und 1.23 befinden sich auf der Mantelfläche des Drehschiebergehäuses 1, so sind zwei Fluidausgangsöffnungen 1.13 gemäß Figur 1 an der ersten Gehäusehälfte 1.1 und zwei Fluidausgangsöffnungen 1.23 an der zweiten Gehäusehälfte 1.2 angeordnet.

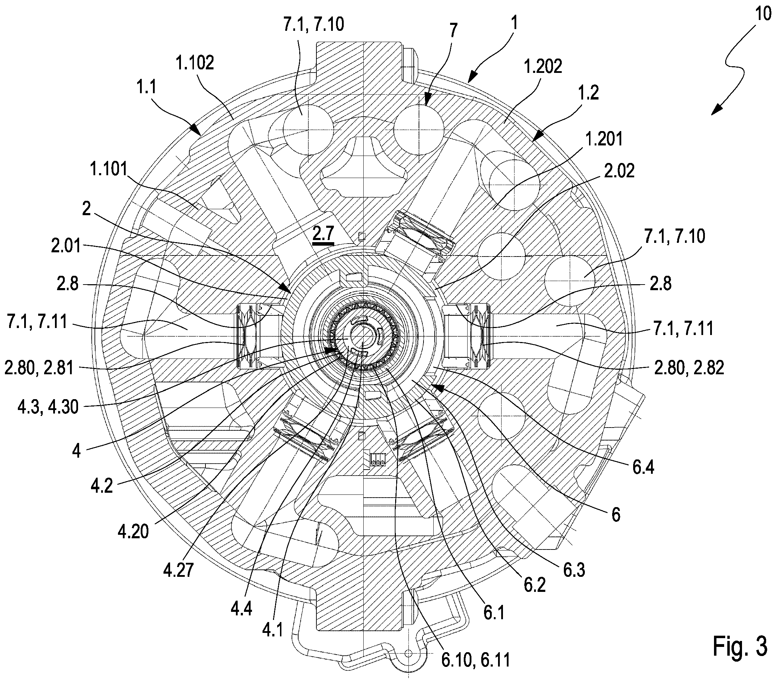

Das Kanalsystem 7 besteht zum einen aus Fluidkanälen 7.1, die als Fluidkanäle 7.10 axial in den beiden Gehäusehälften 1.1 und 1.2 verlaufen, und andererseits aus Fluidkanälen 7.1, die ausgehend von den axial verlaufenden Fluidkanälen 7.10 als Fluidkanäle 7.11 radialverlaufend in einer der Ventilschieberkammern 2.1 bis 2.5 enden, wie dies aus der Schnittdarstellung gemäß Figur 3 ersichtlich ist.

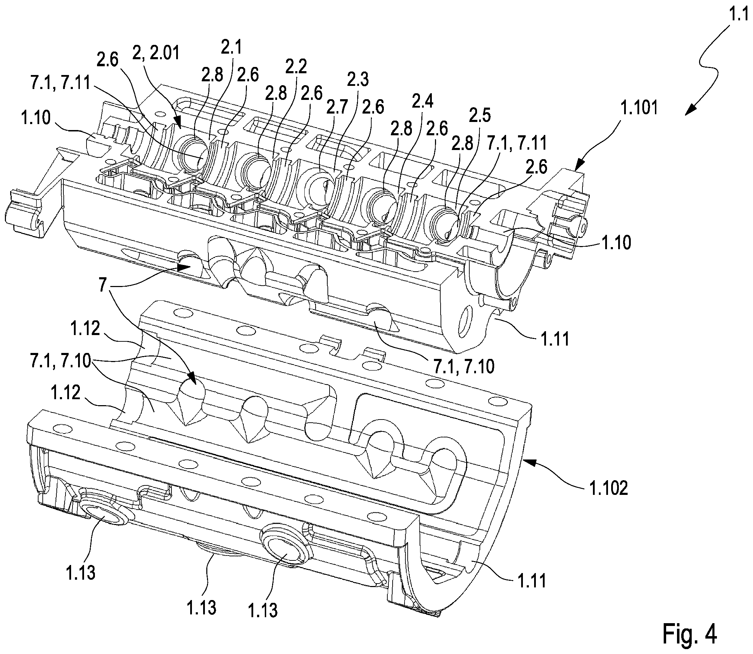

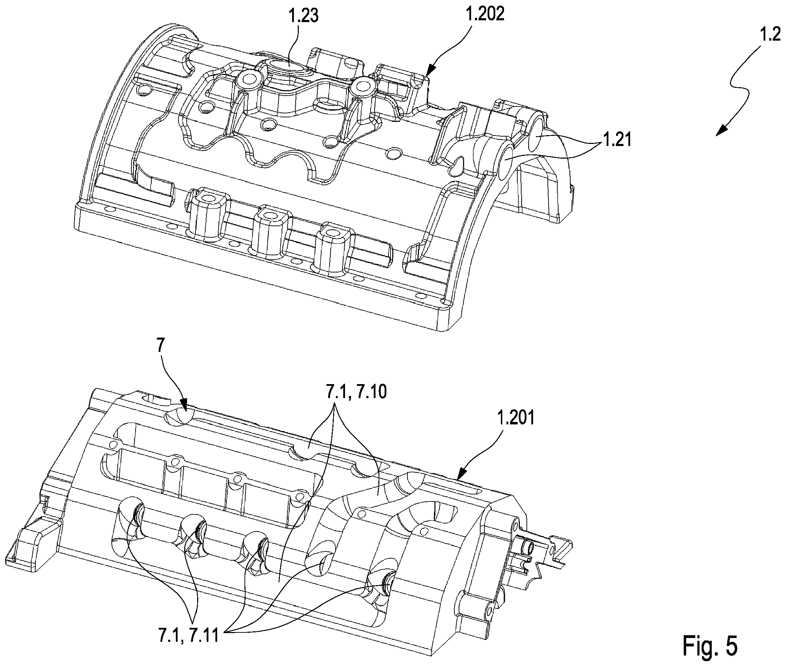

Werden die beiden Gehäusehälften 1.1 und 1.2 jeweils zweischalig, also jeweils aus einer inneren und äußeren Gehäuseschale entsprechend den Figuren 4 und 5 hergestellt, ist dieses Kanalsystem 7 anhand dieser Explosionsdarstellungen detaillierter zu erkennen.

So zeigt die Figur 4 die erste Gehäusehälfte 1.1, die aus einer inneren Gehäuseschale 1.101 und einer äußeren Gehäuseschale 1.102 hergestellt ist. In Figur 5 ist die zweite Gehäusehälfte 1.2 dargestellt, die aus einer inneren Gehäuseschale 1.201 und einer äußeren Gehäuseschale 1.202 besteht.

Auf den aneinander liegenden Oberflächen der jeweils zusammengehörenden Gehäuseschalen 1.101 und 1.102 bzw. 1.201 und 1.202 werden die axial verlaufenden Fluidkanäle 7.10 realisiert, wobei auf aneinanderliegenden Oberflächen der Gehäuseschalen 1.101 und 1.102 bzw. 1.201 und 1.202 jeweils eine Nut hergestellt ist, so dass bei flächenschlüssig Aneinanderliegen der beiden Gehäuseschalen 1.101 und 1.102 bzw. 1.102 und 1.202 die axial verlaufenden Fluidkanäle 7.10 entstehen. In der inneren Gehäuseschale 1.101 bzw. 1.201 sind die jeweils von einer Zulauf- oder Ablauföffnung 2.7 und 2.8 einer Ventilschieberkammer 2.1 bis 2.5 ausgehenden und radial verlaufenden Fluidkanäle 7.11 realisiert, die in einen axial verlaufenden Fluidkanal 7.10 übergehen.

Die beiden Gehäusehälften 1.1 und 1.2 können jeweils kostengünstig einteilig als Spritzgussteil aus einem Kunststoffmaterial hergestellt werden. Es ist auch möglich, entsprechend den Figuren 4 und 5 die beiden Gehäusehälften 1.1 und 1.2 jeweils zweiteilig aus einer inneren und äußeren Gehäuseschale 1.101 und 1.102 bzw. 1.201 und 1.202 herzustellen.

Mit einem solchen Kanalsystem 7 wird Fluid einzelnen ausgewählten Ventilschieberkammern 2.1 bis 2.5 zugeführt und gleichzeitig werden einzelne Zulauf- und Ablauföffnungen 2.7 und 2.8 der Ventilschieberkammern 2.1 bis 2.5. beliebig fluidverbunden, so dass mittels eines solchen Kanalsystems 7 ein komplexer "Verschaltungsplan" realisiert wird.

Die Verteilung des über die Zulauföffnungen 2.7 in den Ventilschieberkammern 2.1 bis 2.5 ankommenden Fluids erfolgt mittels der Ventilschieber 6 querschnittsgesteuert, wobei zunächst ein Ventilschieber 6 selektiv ausgewählt und der ausgewählte Ventilschieber 6 so gedreht wird, dass eine Ablauföffnung 2.8 oder auch benachbarte Ablauföffnungen gleichzeitig mit einem bestimmten Öffnungsquerschnitts geöffnet wird bzw. werden.

Der Ventilschieber 6 umfasst eine Hohlnabe 6.1 und einen diese Hohlnabe 6.1 umschließenden kugelsegmentförmigen Ringkörper 6.2, so dass zwischen dieser Hohlnabe 6.1 und dem Ringkörper 6.2 ein Ringraum 6.3 entsteht, wobei der Ringkörper 6.2 über Stege mit der Hohlnabe 6.1 verbunden ist und dieser Ringraum 6.3 in axialer Richtung keine stirnseitige Begrenzung aufweist. Der Ringkörper 6.2 weist wenigstens eine langschlitzartige Auslassöffnung 6.4 auf, wobei die Längsrichtung eines solchen Langschlitzes in Umfangsrichtung gerichtet ist und in Umfangsrichtung mittig mittels eines Steges geteilt ist.

Die Hohlnabe 6.1 eines Ventilschiebers 6 überragt den Ringkörper 6.2 beidseitig derart, dass die ringförmig mit einer Ringöffnung 5.2 ausgebildeten Trennelemente 5 zwischen benachbarten Ventilschieber 6 gleichzeitig auf den Hohlnaben 6.1 beider Ventilschieber zusammen mit einem Dichtring 5.3 angeordnet ist, wobei auf der Innenwandung der Ringöffnung 5.2 eines Trennelementes 5 ein umlaufender Steg angeordnet ist, an den beidseitig die Stirnseiten der Hohlnaben 6.1 benachbarter Ventilschieber 6 anstoßen und dadurch ein definierter Abstand zwischen benachbarten Hohlnaben 6.1 sichergestellt ist.

Wie aus der Figur 2 zu erkennen ist, sind die jeweils am Ende der Reihe aus den Ventilschiebern 6 und den dazwischen liegenden Trennelementen 5 angeordneten Trennelemente 5.0 konstruktiv anders gestaltet, weisen ebenso einen Dichtring 5.1 auf und sind in gleicher Weise auf der Hohlnabe 6.1 der randseitigen Ventilschieber 6 angeordnet, werden jedoch gleichzeitig von dem ersten und zweiten Gehäuseteil 1.1 und 1.2 stirnseitig umschlossen.

Die Figur 3 zeigt einen Querschnitt einer der Ventilschieberkammern 2.1 bis 2.5 mit einem auf der Welle 4 angeordneten Ventilschieber 6. In dieser Ventilschieberkammer endet eine Zulauföffnung 2.7, über die Fluid in diese Ventilschieberkammer geleitet wird, wobei aufgrund des offenen Ringraums 6.3 des Ventilschiebers 6 auch dieser Ringraum 6.3 mit Fluid geflutet wird. Ferner sind in dieser Ventilschieberkammer fünf Ablauföffnungen 2.8 vorgesehen, über die in Abhängigkeit der Drehstellung des Ventilschiebers 6 Fluid abgeleitet werden kann. Hierzu weisen diese Ablauföffnungen 2.8 jeweils ein Dichtungspaket 2.80 auf, welches fluiddicht auf der Umfangsfläche des Ringkörpers 6.2 anliegt, wenn keine Auslassöffnung 6.4 des Ventilschiebers 6 einem solchen Dichtungspaket 2.80 gegenübersteht, wie dies bei dem in Figur 3 bezeichneten Dichtungspaket 2.81 der Fall ist. Steht dagegen eine Auslassöffnung 6.4 des Ventilschiebers 6 direkt einem solchen Dichtungspaket 2.82 (vgl. Figur 3) gegenüber, kann das Fluid aus dem Ringraum 6.3 des Ventilschiebers 6 über dieses Dichtungspaket 2.82 und die Ablauföffnung 2.8 in den Fluidkanal 7.11 abfließen.

Die als Langschlitz ausgebildete Auslassöffnung 6.4 des Ventilschiebers kann auch eine über den Durchmesser des Dichtungspaketes 2.80 hinausgehende in Umfangsrichtung sich erstreckende Länge aufweisen, so dass der Ventilschieber 6 eine solche Drehstellung einnehmen kann, dass gleichzeitig zwei benachbarte Dichtungspakete 2.80 und somit auch die zugehörigen Ablauföffnungen 2.8 geöffnet werden.

Die einzige Zulauföffnung 2.7 und die fünf Ablauföffnungen 2.8 gemäß Figur 3 sind gleichmäßig in Umfangsrichtung auf der Innenwandung der Ventilschieberkammern 2.1 bis 2.5 angeordnet, d.h. jeweils mit einem Winkelabstand von 60°.

Es können auch mehrere Zulauföffnungen 2.7 in einer Ventilschieberkammer 2.1 bis 2.5 realisiert werden, indem diese Zulauföffnungen ohne Dichtungspaket ausgebildet werden. Ebenso ist es natürlich auch möglich, weniger als fünf Ablauföffnungen 2.8 zu realisieren.

Die selektive Anwahl eines der fünf Ventilschieber 6 und der Steuerung des angewählten Ventilschiebers 6 in eine bestimmte Drehstellung wird nachfolgend anhand der Figuren 6 und 7 erläutert.

Hierzu ist die Welle 4 als Doppelwelle mit einer Innenwelle 4.1 und einer als Hohlwelle ausgebildeten Außenwelle 4.2 ausgebildet. Für den Antrieb dieser Welle 4 ist die Antriebseinheit 8 mit dem ersten und zweiten Antrieb 8.1 und 8.2 vorgesehen, wobei der erste Antrieb 8.1 die Innenwelle 4.1 und der zweite Antrieb 8.2 die Außenwelle 4.2 antreibt.

An dem zu dem ersten Antrieb 8.1 benachbarten Ende der Innenwelle 4.1 befindet sich ein Abschnitt mit einem Schneckengewinde 4.10, auf dem eine Gewindebuchse 4.3 angeordnet ist. Entsprechend der axialen Länge des Schneckengewindes 4.10 ist eine Führungsbuchse 4.4 vorgesehen, die über einen endseitigen Flansch 4.40 in dem Drehschiebergehäuse 1 fixiert ist und in der die Gewindebuchse 4.3 in axialer Richtung geführt und verschoben wird, wenn die Innenwelle 4.1 in Drehung versetzt wird. Hierzu weist die Gewindebuchse 4.3 wenigstens drei radial abstehende Nasen 4.30 auf, die jeweils in Längsschlitze 4.41 der Führungsbuchse 4.4 hindurchgreifen. Da diese Führungsbuchse 4.4 drehfest mit dem Drehschiebergehäuse 1 verbunden ist, kann sich diese Gewindebuchse 4.3 bei einer Drehbewegung der inneren Welle 4.1 lediglich auf der Länge dieser Längsschlitze 4.41 in axialer Richtung verschieben. Die innere Welle 4.1 bildet zusammen mit der Gewindebuchse 4.3 ein Schneckengetriebe.

Die von der Gewindebuchse 4.3 radial abstehenden Nasen 4.30 ragen über die Führungsbuchse 4.4 hinaus in eine auf der Innenwandung der Außenwelle 4.2 vorgesehene Innennut 4.27. Mittels eines als Sicherungsring 4.6 ausgebildeten Mitnehmerrings wird die Gewindebuchse 4.3 in axialer Richtung fixiert. Somit wird bei einer axialen Bewegung der Gewindebuchse 4.3 entlang der Innenwelle 4.1 auch die Außenwelle 4.2 in axialer Richtung mitbewegt. Neben dieser Lagerung mittels der Gewindebuchse 4.3 an einem Ende dieser Außenwelle 4.2 wird diese am anderen Ende mittels einer einseitig hohl ausgeführten Kardanwelle 4.5 gelagert, indem das benachbarte Ende der Außenwelle 4.2 verschiebbar in der Kardanwelle 4.5 geführt wird. Diese Kardanwelle 4.5 wird von dem zweiten Antrieb 8.2 angetrieben, wobei diese Drehbewegung über eine Verzahnung auf die Außenwelle 4.2 übertragen wird. Hierzu weist die Kardanwelle 4.5 auf ihrer Umfangsfläche axial verlaufende Stege 4.50 auf, die in eine entsprechende Innenverzahnung 4.26 auf der Innenwandung der Außenwelle 4.2 eingreifen. Die Drehbewegung der Außenwelle 4.2 ist unabhängig von der Innenwelle 4.1 möglich, da zwischen der Gewindebuchse 4.3 und der Außenwelle 4.2 nur eine axiale Kopplung mittels der Innennut 4.27, jedoch keine radiale Kupplung besteht.

Um eine Drehkopplung zwischen der Außenwelle 4.2 und einem bestimmten Ventilschieber 6 in einer der Ventilschieberkammern 2.1 bis 2.5 herzustellen sind auf der Außenwelle 4.2 in äquidistanten Abständen fünf Stirnräder 4.21 bis 4.25 als Verzahnungskörper 4.20 angeordnet, denen jeweils ein bestimmter innerhalb der Hohlnabe 6.1 angeordneter innenverzahnter Ring 6.11 als Innenverzahnung 6.10 eines Ventilschiebers 6 zugeordnet ist. Wie aus den Figuren 2, 6 und 7 zu erkennen ist, ist jeder dieser Ringe 6.11 in axialer Richtung der Hohlnabe 6.1 an einer anderen Position angeordnet. So ist der Ring 6.11 des Ventilschiebers 6 in der ersten Ventilschieberkammer 2.1 an dem zum ersten Antrieb 8.1 benachbarten Seite der Hohlnabe 6.1 angeordnet, während der Ring 6.11 des an gegenüberliegenden Ende angeordneten Ventilschiebers 6 der fünften Ventilschieberkammer 2.5 sich an der zum zweiten Antrieb 8.2 benachbarten Seite der Hohlnabe 6.1 befindet. Die Ringe 6.11 der verbleibenden Ventilschieber 6 in den Ventilschieberkammern 2.2, 2.3 und 2.4 sind jeweils um die axiale Länge eines Ringes 6.11 verschoben. Dies hat zur Folge, dass in fünf in axialer Richtung verschobenen Schiebestellungen der Außenwelle 4.2 jeweils eines der Stirnräder 4.21 bis 4.25 mit genau einem Ventilschieber 6 über den innenverzahnter Ring 6.11 verzahnt ist.

In einer in Figur 6 dargestellten ersten Schiebestellung der Außenwelle 4.2 ist das Stirnrad 4.21 mit dem Ring 6.11 des Drehschiebers 6 der ersten Ventilschieberkammer 2.1 verzahnt. Wird die Innenwelle 4.1 von dem ersten Antrieb 8.1 um einen bestimmten Drehwinkel verdreht, bewegt sich die Gewindebuchse 4.3 in axialer Richtung entsprechend und verschiebt dadurch die Außenwelle 4.2 in eine zweite Schiebestellung, in der das Stirnrad 4.22 mit dem Ring 6.11 des Drehschiebers 6 der zweiten Ventilschieberkammer 2.2 verzahnt ist. Wird die Innenwelle 4.1 mit einem vorgegebenen Winkel weiter verdreht, erreicht die Außenwelle 4.2 die dritte, vierte und fünfte Schiebestellung, in der das Stirnrad 4.23 mit dem Ring 6.11 des Drehschiebers 6 der dritten Ventilschieberkammer 2.3, das Stirnrad 4.24 mit dem Ring 6.11 des Drehschiebers 6 der vierten Ventilschieberkammer 2.4 bzw. das Stirnrad 4.25 mit dem Ring 6.11 des Drehschiebers 6 der fünften Ventilschieberkammer 2.5 verzahnt ist. Die fünfte Schiebeposition der Außenwelle 4.2, in der das Stirnrad 4.25 mit dem Ring 6.11 des Drehschiebers 6 der fünften Ventilschieberkammer 2.5 verzahnt ist, zeigt Figur 7.

Ist mittels dem ersten Antrieb 8.1 ein Ventilschiebers 6 einer bestimmten Ventilschieberkammer 2.1 bis 2.5 angewählt, wird mittels dem zweiten Antrieb 8.2 der angewählte Ventilschieber 6 in eine bestimmte Drehstellung verdreht, um die Auslassöffnung 6.4 des Ventilschiebers 6 so zu positionieren, dass das Fluid über die richtige Ablauföffnung 2.8 der Ventilschieberkammer des angewählten Ventilschiebers 6 abgeführt wird.

Damit ist diese Anordnung gemäß den Figuren 6 und 7 eine Verstelleinrichtung zur selektiven Anwahl eines der auf der als Doppelwelle ausgebildeten Welle 4 angeordneten fünf Ventilschieber 6 und der Steuerung des angewählten Ventilschiebers 6 in eine bestimmte Drehstellung, wobei diese Verstelleinrichtung gleichzeitig auch den Ventilkörper für das Drehschieberventil 10 darstellt.

### Bezugszeichen

- 1: Drehschiebergehäuse
- 1.1: erste Gehäusehälfte
- 1.101: innere Gehäuseschale der ersten Gehäusehälfte 1.1
- 1.102: äußere Gehäuseschale der ersten Gehäusehälfte 1.1
- 1.10: Lagerhalbschale der ersten Gehäusehälfte 1.1
- 1.11: Fluideingangsöffnung der ersten Gehäusehälfte 1.1
- 1.12: Fluideingangsöffnungen der ersten Gehäusehälfte 1.1
- 1.13: Fluidausgangsöffnungen der ersten Gehäusehälfte 1.1
- 1.2: zweite Gehäusehälfte
- 1.201: innere Gehäuseschale der zweiten Gehäusehälfte 1.2
- 1.202: äußere Gehäuseschale der zweiten Gehäusehälfte 1.2
- 1.20: Lagerhalbschale der zweiten Gehäusehälfte 1.2
- 1.21: Fluideingangsöffnungen der zweiten Gehäusehälfte 1.2
- 1.22: Fluideingangsöffnungen der zweiten Gehäusehälfte 1.2
- 1.23: Fluidausgangsöffnungen der zweiten Gehäusehälfte 1.2

- 2: Ventilraum des Drehschiebergehäuse des 1
- 2.01: Hohl-Halbzylinder der ersten Gehäusehälfte 1.1
- 2.02: Hohl-Halbzylinder der zweiten Gehäuse Hälfte 2.1
- 2.1: Ventilschieberkammer
- 2.2: Ventilschieberkammer
- 2.3: Ventilschieberkammer
- 2.4: Ventilschieberkammer
- 2.5: Ventilschieberkammer
- 2.6: umlaufende Nuten des Ventilraums 2
- 2.7: Zulauföffnung einer Ventilschieberkammer 2.1 bis 2.5
- 2.8: Ablauföffnung einer Ventilschieberkammer 2.1 bis 2.5
- 2.80: Dichtungspaket der Ablauföffnung 2.8
- 2.81: Dichtungspaket der Ablauföffnung 2.8
- 2.82: Dichtungspaket der Ablauföffnung 2.8

- 3: Ventilkörper

- 4: Welle
- 4.1: Innenwelle
- 4.10: Schneckengewinde der Innenwelle 4.1
- 4.2: Außenwelle
- 4.20: Verzahnungskörper
- 4.21: Stirnrad der Außenwelle 4.2
- 4.22: Stirnrad der Außenwelle 4.2
- 4.23: Stirnrad der Außenwelle 4.2
- 4.24: Stirnrad der Außenwelle 4.2
- 4.25: Stirnrad der Außenwelle 4.2
- 4.26: Innenverzahnung der Außenwelle 4.2
- 4.27: Innennut der Außenwelle 4.2
- 4.3: Gewindebuchse
- 4.30: radial abstehende Nasen der Gewindebuchse 4.3
- 4.4: Führungsbuchse
- 4.40: Flansch der Führungsbuchse 4.4
- 4.41: Längsschlitz der Führungsbuchse 4.4
- 4.5: Kardanwelle
- 4.50: Stege der Kardanwelle 4.5
- 4.6: Sicherungsring

- 5: Trennelement
- 5.0: Trennelement
- 5.1: Dichtring des Trennelementes 5
- 5.2: Ringöffnung des Trennelementes 5
- 5.3: Dichtring

- 6: Ventilschieber
- 6.1: Hohlnabe des Ventilschiebers 6
- 6.10: Innenverzahnung
- 6.11: innenverzahnter Ring der Hohlnabe 6.1
- 6.2: Ringkörper des Ventilschiebers 6
- 6.3: Ringraum des Ventilschiebers 6
- 6.4: Auslassöffnung des Ventilschiebers 6

- 7: Kanalsystem des Drehschiebergehäuses 1
- 7.1: Fluidkanäle des Kanalsystem 7
- 7.10: axial verlaufende Fluidkanäle des Kanalsystems 7
- 7.11: radial verlaufende Fluidkanäle des Kanalsystems 7

- 8: Antriebseinheit
- 8.1: erster Antrieb
- 8.2: zweiter Antrieb

- 10: Drehschieberventil

## Patentansprüche

1. Drehschieberventil (10), umfassend ein Drehschiebergehäuse (1) mit:
- einem Ventilraum (2),
- einem in dem Ventilraum (2) angeordneten Ventilkörper (3) mit mehreren auf einer Welle (4) abwechselnd mit Trennelementen (5) angeordneten Ventilschiebern (6), wobei von den einem Ventilschieber (6) benachbarten Trennelementen (5) zusammen mit der zwischen den Trennelementen (5) liegenden Innenwandung des Ventilraums (2) eine gegenüber dem Ventilraum (2) fluiddichte Ventilschieberkammer (2.1, 2.2, 2.3, 2.4, 2.5) ausgebildet ist,
- mehreren Fluideingangsöffnungen (1.11, 1.12) zum Zuführen eines Fluids,
- mehreren Fluidausgangsöffnungen (1.13) zum Abführen des Fluids,
- wenigstens einer in jeweils einer Ventilschiebekammer (2.1, 2.2, 2.3, 2.4, 2.5) endenden Zulauföffnung (2.7), und
- wenigstens einer in jeweils einer Ventilschiebekammer (2.1, 2.2, 2.3, 2.4, 2.5) beginnenden Ablauföffnung (2.8),
**dadurch gekennzeichnet, dass**
- das Drehschiebergehäuse (1) 2-teilig aus halbzylinderförmigen Gehäusehälften (1.1, 1.2) hergestellt ist,
- das Drehschiebergehäuse (1) ein Kanalsystem (7) mit die Fluideingangsöffnungen (1.11, 1.12) mit den Zulauföffnungen (2.7) verbindenden Fluidkanälen (7.1, 7.10) und die Fluidausgangsöffnungen (1.13) mit den Ablauföffnungen (2.8) verbindenden Fluidkanälen (7.1, 7.11) aufweist, und
- das Kanalsystem (7) zum einen aus Fluidkanälen (7.1), die als Fluidkanäle (7.10) axial in den beiden Gehäusehälften (1.1, 1.2) verlaufen, und andererseits aus Fluidkanälen (7.1), die ausgehend von den axial verlaufenden Fluidkanälen (7.10) als Fluidkanäle (7.11) radialverlaufend in einer Ventilschieberkammer (2.1, 2.2, 2.3, 2.4, 2.5) enden.

2. Drehschieberventil (10) nach Anspruch 1,
**dadurch gekennzeichnet, dass**
- eine mit der Welle (4) gekoppelte Antriebseinheit (8) vorgesehen ist,
- mittels der Antriebseinheit (8) ein Ventilschieber (6) selektiv anwählbar und in eine vorgegebene Drehwinkelstellung steuerbar ist.

3. Drehschieberventil (10) nach Anspruch 1 oder 2,
**dadurch gekennzeichnet, dass**
- die Ventilschieber (6) jeweils eine Hohlnabe (6.1) und einen mit dieser radial verbundenen Ringkörper (6.2) aufweisen, wobei zwischen der Hohlnabe (6.1) und dem Ringkörper (6.2) ein zur Ventilschieberkammer (2.1, 2.2, 2.3, 2.4, 2.5) offener Ringraum (6.3) gebildet ist, und
- die zwei benachbarte Ventilschieberkammern (2.1, 2.2, 2.3, 2.4, 2.5) trennenden Trennelemente (5) gleichzeitig auf den Hohlnaben (6.1) benachbarter Ventilschieber (2.1, 2.2, 2.3, 2.4, 2.5) fluiddicht angeordnet sind.

4. Drehschieberventil (10) nach Anspruch 3,
**dadurch gekennzeichnet, dass** der Ringkörper (6.2) der Ventilschieber (6) mit wenigstens einer Auslassöffnung (6.4) ausgebildet ist.

5. Drehschieberventil (10) nach einem der Ansprüche 1 bis 4,
**dadurch gekennzeichnet, dass** die wenigstens eine Ablauföffnung (2.8) einer Ventilschieberkammer (2.1, 2.2, 2.3, 2.4, 2.5) mit einem Dichtungspaket (2.80, 2.81, 2.82) ausgebildet ist, welches gegenüber der Ventilschieberkammer (2.1, 2.2, 2.3, 2.4, 2.5) fluiddicht an dem Ventilschieber (6) anliegt.

6. Drehschieberventil (10) nach einem der vorhergehenden Ansprüche,
**dadurch gekennzeichnet, dass** die halbzylinderförmigen Gehäusehälften (1.1, 1.2) des Drehschiebergehäuse (1) jeweils zweischalig aus einer inneren Halbschale (1.101, 1.102) und einer äußeren Halbschale (1.201, 1.202) ausgebildet sind, wobei zur Bildung des Kanalsystems (7) eine innere und eine äußere Halbschale (1.102, 1.102, 1.201, 1.202) jeweils korrespondierende Kanalhälften aufweisen.

7. Drehschieberventil (10) nach einem der vorhergehenden Ansprüche, **dadurch gekennzeichnet, dass**
- die Welle (4) als Doppelwelle mit einer Innenwelle (4.1) und einer koaxial zur Innenwelle angeordnete Außenwelle (4.2) ausgebildet ist, wobei
- die Innenwelle (4.1) ausgebildet ist, in Abhängigkeit einer Drehwinkelstellung eine Wirkverbindung zwischen der Außenwelle (4.2) und einem der Ventilschieber (6) herzustellen, und
- die Außenwelle (4.2) ausgebildet ist, den bestimmten Ventilschieber (6) in eine definierte Drehwinkelstellung zu verdrehen.

8. Drehschieberventil (10) nach Anspruch 7,
**dadurch gekennzeichnet, dass** die Innenwelle (4.1) derart wirkverbunden mit der Außenwelle (4.2) ist, dass in Abhängigkeit der Drehwinkelstellung der Innenwelle (4.1) die Außenwelle (4.2) in der Anzahl der Ventilschieber (6) entsprechenden Schiebestellungen verschiebbar ist.

9. Drehschieberventil (10) nach Anspruch 8,
**dadurch gekennzeichnet, dass** die Wirkverbindung der Innenwelle (4.1) mit der Außenwelle (4.2) mittels eines Schneckengetriebes realisiert ist.

10. Drehschieberventil nach einem der Ansprüche 7 bis 9,
**dadurch gekennzeichnet, dass**
- die Ventilschieber (6) jeweils mit einer Innenverzahnung (6.10) ausgebildet sind,
- auf der Außenwelle (4.2) je ein zur Innenverzahnung (6.10, 6.11) eines Ventilschiebers (6) korrespondierender Verzahnungskörper (4.20, 4.21, 4.22, 4.23, 4.24, 4.25) angeordnet ist, und
- in jeder Schiebestellung der Außenwelle (4.2) eine Drehverbindung zwischen einem Verzahnungskörper (4.20, 4.21, 4.22, 4.23, 4.24, 4.25) und der korrespondierenden Innenverzahnung (6.10, 6.11) eines Ventilschiebers (6) hergestellt ist.

11. Drehschieberventil (10) nach einem der Ansprüche 7 bis 10,
**dadurch gekennzeichnet, dass** die Antriebseinheit (8) einen die Innenwelle (4.1) antreibenden ersten Antrieb (8.1) und einen die Außenwelle (4.2) antreibenden zweiten Antrieb (8.2) umfasst.

## Claims

1. Rotary nozzle valve (10), comprising a rotary nozzle housing (1) having:
- a valve frame (2),
- a valve body (3) disposed in the valve frame (2) having several valve sliders (6) disposed, alternatingly with separating elements (5), on a shaft (4), wherein from the separating elements (5) adjacent to a valve slider (6) together with the inner wall, located between the separating elements (5), of the valve frame (2) is formed a valve slider chamber (2.1, 2.2, 2.3, 2.4, 2.5) which is fluid-tight with respect to the valve frame (2),
- several fluid inlet openings (1.11, 1.12) for supplying a fluid,
- several fluid outlet openings (1.13) for discharging the fluid,
- at least one feed opening (2.7) ending in respectively one valve slider chamber (2.1, 2.2, 2.3, 2.4, 2.5) and
- at least one drainage opening (2.8) beginning in respectively one valve slider chamber (2.1, 2.2, 2.3, 2.4, 2.5),
**characterised in that**
- the rotary nozzle housing (1) is manufactured in 2-parts from semi-cylindrically shaped housing halves (1.1, 1.2),
- the rotary nozzle housing (1) has a channel system (7) having fluid channels (7.1, 7.10) connecting the fluid inlet openings (1.11, 1.12) with the feed openings (2.7) and fluid channels (7.1, 7.11) connecting the fluid outlet openings (1.13) with the drainage openings (2.8), and
- the channel system (7) on the one hand of fluid channels (7.1) which as fluid channels (7.10) extend axially into the two housing halves (1.1, 1.2), and on the other hand of fluid channels (7.1) which starting from the axially extending fluid channels (7.10) end as fluid channels (7.11) radially extending in a valve slider chamber (2.1, 2.2, 2.3, 2.4, 2.5).

2. Rotary nozzle valve (10) according to claim 1,
**characterised in that**
- a drive unit (8) is provided coupled with the shaft (4),
- by means of the drive unit (8), a valve slider (6) can be selectively selected and can be manoeuvred into a predetermined rotation angle position.

3. Rotary nozzle valve (10) according to claim 1 or 2,
**characterised in that**
- the valve sliders (6) have in each case a hollow hub (6.1) and an annular body (6.2) connected radially therewith, wherein between the hollow hub (6.1) and the annular body (6.2) is formed an annular frame (6.3) open to the valve slider chamber (2.1, 2.2, 2.3, 2.4, 2.5), and
- the two separating elements (5) separating adjacent valve slider chambers (2.1, 2.2, 2.3, 2.4, 2.5) are disposed in a fluid-tight manner simultaneously on the hollow hubs (6.1) of adjacent valve sliders (2.1, 2.2, 2.3, 2.4, 2.5).

4. Rotary nozzle valve (10) according to claim 3,
**characterised in that**
the annular body (6.2) of the valve sliders (6) is formed having at least one outlet opening (6.4).

5. Rotary nozzle valve (10) according to any of claims 1 to 4,
**characterised in that**
the at least one drainage opening (2.8) of a valve slider chamber (2.1, 2.2, 2.3, 2.4, 2.5) is formed having a gasket package (2.80, 2.81, 2.82) which abuts on the valve slider (6) in a manner which is fluid-tight with respect to the valve slider chamber (2.1, 2.2, 2.3, 2.4, 2.5).

6. Rotary nozzle valve (10) according to any of the preceding claims,
**characterised in that**
the semi-cylindrically-shaped housing halves (1.1, 1.2) of the rotary nozzle housing (1) are formed in each case with two shells, from an inner semi-shell (1.101, 1.102) and an outer semi-shell (1.201, 1.202), wherein for forming the channel system (7) an inner and an outer semi-shell (1.102, 1.102, 1.201, 1.202) have respectively corresponding channel halves.

7. Rotary nozzle valve (10) according to any of the preceding claims,
**characterised in that**
- the shaft (4) is formed as a double shaft having an inner shaft (4.1) and an outer shaft (4.2) disposed coaxially to the inner shaft, wherein
- the inner shaft (4.1) is formed to establish an operative connection between the outer shaft (4.2) and one of the valve sliders (6), depending on a rotation angle position, and
- the outer shaft (4.2) is formed to rotate the specified valve slider (6) into a defined rotation angle position.

8. Rotary nozzle valve (10) according to claim 7,
**characterised in that**
the inner shaft (4.1) is operatively connected with the outer shaft (4.2) such that, depending on the rotation angle position of the inner shaft (4.1), the outer shaft (4.2) can be slid into slide positions corresponding to the number of the valve sliders (6).

9. Rotary nozzle valve (10) according to claim 8,
**characterised in that**
the operative connection of the inner shaft (4.1) with the outer shaft (4.2) is realised by means of a worm gear.

10. Rotary nozzle valve according to any of claims 7 to 9,
**characterised in that**
- the valve sliders (6) are formed respectively having an inner toothing (6.10),
- on the outer shaft (4.2) is disposed in each case a toothing body (4.20, 4.21, 4.22, 4.23, 4.24, 4.25) corresponding to the inner toothing (6.10, 6.11) of a valve slider (6), and
- in each slide position of the outer shaft (4.2) a rotational connection is established between a toothing body (4.20, 4.21, 4.22, 4.23, 4.24, 4.25) and the corresponding inner toothing (6.10, 6.11) of a valve slider (6).

11. Rotary nozzle valve (10) according to any of claims 7 to 10,
**characterised in that**
the drive unit (8) comprises a first drive (8.1) driving the inner shaft (4.1) and a second drive (8.2) driving the outer shaft (4.2).

## Revendications

1. Soupape rotative (10) comprenant un boîtier de soupape rotative (1) avec :
- un espace de soupape (2),
- un corps de soupape (3) agencé dans l'espace de soupape (2) avec plusieurs tiroirs de soupape (6) agencés sur un arbre (4) en alternance avec des éléments de séparation (5), dans laquelle une chambre de tiroir de soupape (2.1, 2.2, 2.3, 2.4, 2.5) étanche au fluide par rapport à l'espace de soupape (2) est réalisée par les éléments de séparation (5) contigus à un tiroir de soupape (6) conjointement avec la paroi intérieure, se trouvant entre les éléments de séparation (5), de l'espace de soupape (2),
- plusieurs ouvertures d'entrée de fluide (1.11, 1.12) pour l'amenée d'un fluide,
- plusieurs ouvertures de sortie de fluide (1.13) pour l'évacuation du fluide,
- au moins une ouverture d'afflux (2.7) se terminant dans respectivement une chambre de tiroir de soupape (2.1, 2.2, 2.3, 2.4, 2.5), et
- au moins une ouverture d'écoulement (2.8) commençant dans respectivement une chambre de tiroir de soupape (2.1, 2.2, 2.3, 2.4, 2.5),
**caractérisée en ce que**
- le boîtier de soupape rotative (1) est fabriqué en 2 parties de moitiés de boîtier (1.1, 1.2) en forme de demi-cylindre,
- le boîtier de soupape rotative (1) présente un système de canal (7) avec des canaux de fluide (7.1, 7.10) raccordant les ouvertures d'entrée de fluide (1.11, 1.12) aux ouvertures d'afflux (2.7) et des canaux de fluide (7.1, 7.11) raccordant les ouvertures de sortie de fluide (1.13) aux ouvertures d'écoulement (2.8), et
- le système de canal (7) d'une part de canaux de fluide (7.1), qui s'étendent en tant que canaux de fluide (7.10) axialement dans les deux moitiés de boîtier (1.1, 1.2), et d'autre part de canaux de fluide (7.1), qui se terminent s'étendant radialement à partir des canaux de fluide (7.10) s'étendant axialement en tant que canaux de fluide (7.11) dans une chambre de tiroir de soupape (2.1, 2.2, 2.3, 2.4, 2.5).

2. Soupape rotative (10) selon la revendication 1,
**caractérisée en ce que**
- une unité d'entraînement (8) couplée à l'arbre (4) est prévue,
- au moyen de l'unité d'entraînement (8), un tiroir de soupape (6) est sélectionnable de manière sélective et est commandable dans une position d'angle de rotation prédéfinie.

3. Soupape rotative (10) selon la revendication 1 ou 2,
**caractérisée en ce que**
- les tiroirs de soupape (6) présentent respectivement un moyeu creux (6.1) et un corps annulaire (6.2) raccordé radialement à celui-ci, dans laquelle un espace annulaire (6.3) ouvert vers la chambre de tiroir de soupape (2.1, 2.2, 2.3, 2.4, 2.5) est formé entre le moyeu creux (6.1) et le corps annulaire (6.2), et
- les éléments de séparation (5) séparant deux chambres de tiroir de soupape (2.1, 2.2, 2.3, 2.4, 2.5) contigües sont agencés de manière étanche au fluide simultanément sur les moyeux creux (6.1) de tiroirs de soupape (2.1, 2.2, 2.3, 2.4, 2.5) contigus.

4. Soupape rotative (10) selon la revendication 3,
**caractérisée en ce que**
le corps annulaire (6.2) des tiroirs de soupape (6) est réalisé avec au moins une ouverture d'échappement (6.4).

5. Soupape rotative (10) selon l'une des revendications 1 à 4,
**caractérisée en ce que**
l'au moins une ouverture d'écoulement (2.8) d'une chambre de tiroir de soupape (2.1, 2.2, 2.3, 2.4, 2.5) est réalisée avec un paquet de garniture (2.80, 2.81, 2.82) qui repose de manière étanche au fluide par rapport à la chambre de tiroir de soupape (2.1, 2.2, 2.3, 2.4, 2.5) contre le tiroir de soupape (6).

6. Soupape rotative (10) selon l'une quelconque des revendications précédentes,
**caractérisée en ce que**
les moitiés de boîtier en forme de demi-cylindre (1.1, 1.2) du boîtier de soupape rotative (1) sont réalisées respectivement en deux coques d'une demi-coque intérieure (1.101, 1.102) et d'une demi-coque extérieure (1.201, 1.202), dans laquelle pour la formation du système de canal (7) une demi-coque intérieure et une demi-coque extérieure (1.102, 1.102, 1.201, 1.202) présentent respectivement des moitiés de canal correspondantes.

7. Soupape rotative (10) selon l'une quelconque des revendications précédentes, **caractérisée en ce que**
- l'arbre (4) est réalisé comme double arbre avec un arbre intérieur (4.1) et un arbre extérieur (4.2) agencé coaxialement à l'arbre intérieur, dans laquelle
- l'arbre intérieur (4.1) est réalisé afin d'établir en fonction d'une position d'angle de rotation une liaison active entre l'arbre extérieur (4.2) et un des tiroirs de soupape (6), et
- l'arbre extérieur (4.2) est réalisé afin de tourner le tiroir de soupape (6) déterminé dans une position d'angle de rotation définie.

8. Soupape rotative (10) selon la revendication 7,
**caractérisée en ce que**
l'arbre intérieur (4.1) est activement relié à l'arbre extérieur (4.2) de telle manière qu'en fonction de la position d'angle de rotation de l'arbre intérieur (4.1) l'arbre extérieur (4.2) soit coulissant dans des positions de coulissement correspondant au nombre de tiroirs de soupape (6).

9. Soupape rotative (10) selon la revendication 8,
**caractérisée en ce que**
la liaison active de l'arbre intérieur (4.1) avec l'arbre extérieur (4.2) est réalisée au moyen d'un engrenage à vis sans fin.

10. Soupape rotative selon l'une des revendications 7 à 9,
**caractérisée en ce que**
- les tiroirs de soupape (6) sont réalisés respectivement avec une denture intérieure (6.10),
- un corps de denture (4.20, 4.21, 4.22, 4.23, 4.24, 4.25) correspondant à la denture intérieure (6.10, 6.11) d'un tiroir de soupape (6) est agencé chaque fois sur l'arbre extérieur (4.2), et
- dans chaque position coulissante de l'arbre extérieur (4.2) une liaison rotative entre un corps de denture (4.20, 4.21, 4.22, 4.23, 4.24, 4.25) et la denture intérieure (6.10, 6.11) correspondante d'un tiroir de soupape (6) est établie.

11. Soupape rotative (10) selon l'une des revendications 7 à 10,
**caractérisée en ce que**
l'unité d'entraînement (8) comprend un premier entraînement (8.1) entraînant l'arbre intérieur (4.1) et un second entraînement (8.2) entraînant l'arbre extérieur (4.2).
